(19) Europäisches Patentamt / European Patent Office / Office européen des brevets

(11) **EP 2 761 337 B1**

(12) **EUROPEAN PATENT SPECIFICATION**

(45) Date of publication and mention
of the grant of the patent:
**28.08.2019 Bulletin 2019/35**

(21) Application number: **12783703.7**

(22) Date of filing: **26.09.2012**

(51) Int Cl.:
*G01V 1/30* *(2006.01)*        *G01V 1/50* *(2006.01)*

(86) International application number:
**PCT/US2012/057274**

(87) International publication number:
**WO 2013/049158 (04.04.2013 Gazette 2013/14)**

(54) **METHODS OF EVALUATING ROCK PROPERTIES WHILE DRILLING USING DOWNHOLE ACOUSTIC SENSORS AND A DOWNHOLE BROADBAND TRANSMITTING SYSTEM**

VERFAHREN ZUR AUSWERTUNG VON GESTEINSEIGENSCHAFTEN WÄHREND DES BOHRENS MIT BOHRLOCHAKUSTIKSENSOREN UND EINEM BREITBANDIGEN ÜBERTRAGUNGSSYSTEM

PROCÉDÉS POUR ÉVALUER LES PROPRIÉTÉS D'UNE ROCHE PENDANT LE FORAGE AU MOYEN DE CAPTEURS ACOUSTIQUES DE FOND DE TROU ET D'UN SYSTÈME DE TRANSMISSION À LARGE BANDE DE FOND DE TROU.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011   US 201161539246 P**
**26.09.2011   US 201161539165 P**
**26.09.2011   US 201161539171 P**
**20.07.2012   US 201213554077**
**20.07.2012   US 201213553958**
**20.07.2012   US 201213554369**

(43) Date of publication of application:
**06.08.2014   Bulletin 2014/32**

(73) Proprietor: **Saudi Arabian Oil Company**
**Dhahran 31311 (SA)**

(72) Inventor: **YANG, Yunlai**
**Ras Tanura 31311 (SA)**

(74) Representative: **Robinson, David Edward Ashdown**
**Marks & Clerk LLP**
**1 New York Street**
**Manchester M1 4HD (GB)**

(56) References cited:
EP-A2- 0 718 641        CA-A1- 2 508 404
US-A1- 2006 076 161     US-A1- 2006 120 217
US-A1- 2009 067 286     US-A1- 2010 284 247

**Description**

**BACKGROUND OF THE INVENTION**

**1. Field of the Invention**

This invention relates in general to hydrocarbon production, and more particularly, to identifying rock types and rock properties in order to improve or enhance drilling operations.

**2. Description of the Related Art**

Measuring rock properties during drilling in real time can provide the operator the ability to steer a drill bit in the direction of desired hydrocarbon concentrations. In current industrial practice and prior inventions, either resistivity or sonic logging while drilling (LWD) tools are employed to guide the drill bit during horizontal or lateral drilling. The center of these techniques is to calculate the locations of the boundary between the pay zone and the overlying rock (upper boundary), and the boundary between the pay zone and underlying rock at the sensors location. The drill bit is steered or maintained within the pay zone by keeping the drill string, at the sensors position, in the middle, or certain position between the upper and lower boundaries of the pay zone. The conventional borehole acoustic telemetry system, which transmits data at low rate (at about tens bit per second), is employed to transmit the measured data to surface.

Since the sensors are located 30 - 50 feet behind the drill bit, theses conventional LWD steering tools only provide data used in steering the drill bit 9 - 15 m (30 - 50 feet) behind the drill bit. As the result, it is only after the 9 - 15 m (30 - 50 feet) that the operator finds out if the selected drilling path is or is not the desired one. Therefore, these tools are not true real-time tools.

Some newer types of systems attempt to provide data at the drill bit, at -real-time, while still utilizing conventional borehole telemetry systems (having a relatively slow bit rate). Such systems, for example, are described as including a downhole processor configured to provide downhole on-site processing of acoustic data to interpret the lithologic properties of the rock encountered by the drill bit through comparison of the acoustic energy generated by the drill bit during drilling with predetermined bit characteristics generated by rotating the drill bit in contact with a known rock type. The lithoiogic properties interpreted via the comparison are then transmitted to the surface via the conventional borehole telemetry system. Although providing data in a reduced form requiring only a bit rate speed, as such systems do not provide raw data real-time which can be used for further analysis, it is nearly impossible to construct additional interpretation models or modify any interpretation models generated, by the downhole processor.

Some newer types of borehole data transmitting systems utilize a dedicated electronics unit and a segmented broadband cable protected by a reinforced steel cable positioned within the drill pipe to provide a much faster communication capability. Such systems have been employed into conventional LWD tools to enhance the resolution of the logged information. However the modified tools still measures rock properties at the similar location which is 30 - 50 feet behind the drill bit. Canadian patent publication number CA2508404 describes a Sub Surface Tool to be included integrally in the bottom hole assembly of the drill stream. United States patent publication number US2006/076161 describes receipt of acoustic signals generated by drilling a bore hole with a drill bit at sensors placed in the drill stream. US 2006/120217 relates to processing of acoustic data in real time by a surface computer.

Accordingly, recognized by the inventor is the need for apparatus, computer readable medium, program code, and methods of identifying rock properties in real-time during drilling, and more particularly, methods which include positioning acoustic sensors adjacent the drill bit to detect drill sounds during drilling operations, pushing raw acoustic sensor data to a surface computer over a broadband transmitting system, receiving the raw acoustic sensor data, and deriving the rock type and/or evaluating the properties of the rocks in real-time utilizing the raw acoustic sensor data.

**SUMMARY OF THE INVENTION**

In view of the foregoing, various embodiments of the present invention advantageously provide apparatus, computer readable medium, program code, and methods of identifying rock types and rock properties of rock that is currently in contact with an operationally employed, drilling bit, which can be used in real-time steering of the drilling bit during drilling. The present invention provides a method which includes positioning acoustic sensors adjacent the drill bit to detect drill sounds during drilling operations, pushing raw acoustic sensor data to a surface computer over a broadband transmitting system, receiving the raw acoustic sensor data, and deriving the rock type and/or evaluating the properties of the rocks in real-time utilizing the raw acoustic sensor data.

According to various embodiments of the present invention, a surface computer/processor receives the raw acoustic sensor data. Utilizing the raw acoustic sensor data, the computer can advantageously function to derive a frequency distribution of the acoustic sensor data, derive acoustic characteristics from the raw acoustic data, and determine petrophysical properties of rock from the raw acoustic sensor data. The acoustic characteristics can advantageously further be used to identify the lithology type of the rock encountered by the drill bit, to determine the formation boundary, to determine an optimal location of the casing shoe, among other applications. According to various embodiments of the present invention, to determine petrophysical properties of the rock directly from the raw acoustic sensor data (generally after being converted into the frequency domain and filtered), a petrophysical properties evaluation algorithm can be derived from acoustic sensor data and correspondent petrophysical properties of formation samples.

Examples of a method of identifying rock properties of rock in real-time during operational drilling, to include identifying lithology type and other petrophysical properties, can include the deployment, installation, and/or positioning of both conventional components and additional/enhanced acoustic components. Some primary conventional components include a drill string containing a plurality of drill pipes each having an inner bore, a drill bit connected to the downhole end of the drill string, and a top drive system for rotating the drill string having both rotating and stationary portion. The additional/acoustic components can include a downhole sensor subassembly connected to and between the drill bit and the drill string, acoustic sensors (e.g. accelerometer, measurement microphone, contact microphone, hydrophone) attached to or contained within the downhole sensor subassembly adjacent the drill bit and positioned to detect drill sounds during drilling operations. The additional components can also include a broadband transmitting system operably extending through the inner bore of each of the plurality of drill pipes and operably coupled to the acoustic sensors through the downhole data transmitting interface position therewith, a surface data transmitting interface typically connected to a stationary portion of the top drive system, a surface data acquisition unit connected to the surface data transmitting interface, and a surface computer operably coupled to the downhole data transmitting interface through the data acquisition unit, the surface data transmitting interface, and the broadband transmitting system.

Other examples of the method can also include both computer employable steps (operations), as described later with respect to the operations performed by various featured apparatus/program code, and various non-computer implemented steps which provide substitutable replacements for the featured computer implemented steps, in conjunction with additional non-computer implemented steps as described below and/or as featured in the appended claims. Examples of various embodiments of the method are described below.

According to an embodiment of a method of analyzing properties of rock in a formation in real-time during drilling, the method can include the steps of sending sampling commands to the data acquisition unit and receiving raw acoustic sensor data from a surface data interface in communication with a communication medium further in communication with a downhole data interface operably coupled to a plurality of acoustic sensors. The method can also include various processing steps which include deriving a frequency distribution of the raw acoustic sensor data, deriving a plurality of acoustic characteristics including mean frequency and normalized deviation of frequency from the raw acoustic sensor data utilizing, for example, an acoustics characteristics evaluation algorithm, and/or deriving petrophysical properties from the raw acoustic sensor data utilizing, for example, a petrophysical properties evaluation algorithm employable to predict one or more petrophysical properties of rock undergoing drilling.

According to an embodiment of the method, the step of deriving a frequency distribution of the acoustic data from the raw acoustic sensor data includes transforming the raw acoustic sensor data into the frequency domain (e.g., employing a Fast Fourier Transform (FFT)), and filtering the transformed data.

According to an embodiment of the method, the step of deriving the plurality of acoustic characteristics from the raw acoustic sensor data can include providing the acoustic characteristics evaluation algorithm and comparing the mean frequency, the normalized deviation of frequency, the mean amplitude, the normalized deviation of amplitude, and apparent power for the rock undergoing drilling with the mean frequency, normalized deviation of frequency, mean amplitude, normalized deviation of amplitude, and apparent power for a plurality of rock samples having different known lithologies according to a first configuration, or comparing only part of the acoustic characteristics, such as the mean frequency and the normalized deviation of frequency of the rock undergoing drilling with the same type of acoustic characteristics of a plurality of rock samples having different known lithologies according to another configuration.. The method can also include identifying lithology type of the rock undergoing drilling, determining a location of a formation boundary encountered during drilling, and/or identifying an ideal location for casing shoe positioning, among others.

According to an exemplary implementation, the mean frequency and normalized deviation of frequency are examined together to determine an amount of correlation of the acoustic characteristics associated with the rock undergoing drilling and the acoustic characteristics associated with the rock samples. Also or alternatively, the mean frequency and the mean amplitude can be examined together and/or with normalized deviation of frequency and/or normalized deviation of amplitude and apparent power, or a combination thereof. The step of comparing can beneficially be performed substantially continuously during drill bit steering in order to provide enhanced steering ability.

According to an embodiment of the method, the step of deriving petrophysical properties from the raw sensor data can include deriving a bit-specific petrophysical properties evaluation algorithm for use in evaluating the received signals. The derivation of the algorithm can include collecting petrophysical properties data describing one or more petrophysical properties of rock for a plurality of formation samples and correspondent acoustic data for a preselected type of drill bit and processing the collected acoustic data to produce filtered FFT data. The algorithm derivation can also include determining one or more relationships between features of the filtered FFT data and correspondent one or more petrophysical properties of rock describing petrophysical properties of a plurality of formation samples, e.g., utilizing mathematical modeling techniques such as, multiple regression analysis, artificial neural network modeling, etc. The algorithm derivation can also include coding the determined relationships into computer program code defining the bit-specific petrophysical properties evaluation algorithm. The derived algorithm can then be used in predicting one or more petrophysical properties of the rock undergoing drilling real-time responsive to filtered data associated with raw acoustic sensor data produced in response to the drilling.

According to another embodiment of the method, the step of deriving petrophysical properties from the raw sensor data can also or alternatively include deriving a bit-independent petrophysical properties evaluation algorithm. The derivation of the algorithm can include collecting petrophysical properties data describing one or more petrophysical properties of rock for a plurality of formation samples and correspondent acoustic data for a plurality of different types of drill bits, processing the collected acoustic data to produce filtered FFT data, and determining bit-type independent features of the filtered FFT data. The algorithm derivation can also include determining one or more relationships between the bit-type independent features of the filtered FFT data and correspondent one or more petrophysical properties of the rock, e.g., using mathematical modeling techniques, such as artificial neural network modeling, etc., to provide a bit-independent evaluation methodology. The algorithm derivation can also include coding the determined relationships into computer program code defining the bit-independent petrophysical evaluation properties algorithm. Correspondingly, the method can include employing the derived petrophysical properties evaluation algorithm to predict one or more petrophysical properties of the rock undergoing drilling real-time responsive to filtered data associated with raw acoustic sensor data produced in response to the drilling, as described, for example, with respect to the prior described bit-specific evaluation methodology.

According to an example, apparatus for analyzing properties of rock in a formation in real-time during drilling are also provided. An example of an embodiment of such an apparatus can include a drill string containing a plurality of drill pipes each having an inner bore, a drill bit connected to the downhole end of the drill string, and a top drive system for rotating the drill string having both rotating and stationary portion. The apparatus can also include a downhole sensor subassembly connected to a rotating portion of the system, such as, for example, to and between the drill bit and the drill string, acoustic sensors (e.g. accelerometer, measurement microphone, contact microphone, hydrophone) attached to or contained within the downhole sensor subassembly adjacent the drill bit and positioned to detect drill sounds during drilling operations. The apparatus can further include a broadband transmitting system operably extending through the inner bore of each of the plurality of drill pipes and operably coupled to the acoustic sensors through the downhole data transmitting interface position therewith, a surface data transmitting interface typically connected to a stationary portion of the top drive system, a data acquisition unit in communication with the surface data transmitting interface, and a surface computer operably coupled to the downhole data transmitting interface through surface acquisition unit, the surface data transmitting interface, and the broadband transmitting system.

According to an embodiment of the apparatus, the computer includes a processor, memory in communication with the processor, and petrophysical properties analyzing program, which can adapt the computer to perform various operations. The operations can include, for example, sending sampling commands to the data acquisition unit, receiving raw acoustic data from the downhole data transmitting interface, processing the received raw acoustic sensor data--deriving a frequency distribution of the acoustic data from the raw acoustic data, employing an acoustics characteristics evaluation algorithm to thereby derive acoustic characteristics from the raw acoustic sensor data (e.g., via analysis of the processed acoustics data), and employing a petrophysical properties evaluation algorithm to thereby derive petrophysical properties of rock undergoing drilling, real-time, from the acoustics data.

According to an embodiment of the apparatus, the acoustic characteristics evaluation algorithm evaluates filtered Fast Fourier Transform data for acoustic characteristics. The acoustic characteristics can include mean frequency, normalized deviation of frequency, mean amplitude, normalized deviation of amplitude, and apparent power. These characteristics can be predetermined for rock samples having a known lithology type and/or petrophysical properties, and thus, can be used to identify lithology type and other properties by comparing such characteristics of the acoustic data received during drilling to that determined for the rock samples. According to another embodiment of the apparatus, the computer uses the derived acoustic characteristics to determine formation boundaries based on real-time detection of changes in the lithology type of the rock being drilled and/or petrophysical properties thereof.

According to an exemplary configuration, the petrophysical properties analyzing program or separate program code functions derive a "bit specific" or "bit independent" petrophysical properties evaluation algorithm. Similarly, the derived bit specific or bit independent petrophysical properties evaluation algorithm evaluates filtered Fast Fourier Transform data for petrophysical properties. This petrophysical property data can advantageously be applied by other applications to include real-time lithology type identification, formation boundary determination, casing shoe position fine-tuning, etc.

According to an example, the petrophysical properties analyzing program can be provided either as part of the apparatus or as a standalone deliverable. As such, the petrophysical properties analyzing program can include a set of instructions, stored or otherwise embodied on a non-transitory computer readable medium, that when executed by a computer, cause the computer to perform various operations. These operations can include the operation of receiving raw acoustic sensor data from a surface data interface in communication with a communication medium that is further in communication with a downhole data interface operably coupled to a plurality of acoustic sensors. The operations can also include the processing operations of deriving a frequency distribution of the raw acoustic sensor data, deriving a plurality of acoustic characteristics including mean frequency and normalized deviation of frequency from the raw acoustic sensor data, and/or deriving petrophysical properties from the raw acoustic sensor data utilizing a derived petrophysical properties evaluation algorithm employable to predict one or more petrophysical properties of rock undergoing drilling.

According to an embodiment of the petrophysical properties analyzing program, the operation of deriving a frequency distribution of the acoustic data from the raw acoustic sensor data includes transforming the raw acoustic sensor data into the frequency domain (e.g., employing a Fast Fourier Transform), and filtering the transformed data.

According to an embodiment of the petrophysical properties analyzing program, the operation of deriving the plurality of acoustic characteristics from the raw acoustic sensor data can include comparing the mean frequency, the normalized deviation of frequency, the mean amplitude, the normalized deviation of amplitude, and apparent power for the rock undergoing drilling with the mean frequency, normalized deviation of frequency, mean amplitude, normalized deviation of amplitude, and apparent power for a plurality of rock samples having different known lithologies according to a first configuration, or comparing only part of the acoustic characteristics, such as the mean frequency and the normalized deviation of frequency of the rock undergoing drilling with the same type of acoustic characteristics of a plurality of rock samples having different known lithologies according to another configuration. The operations can also include identifying lithology type of the rock undergoing drilling, determining a location of a formation boundary encountered during drilling, and/or identifying an ideal location for casing shoe positioning, among others.

According to an exemplary implementation, the mean frequency and normalized deviation of frequency are examined together to determine an amount of correlation of the acoustic characteristics associated with the rock undergoing drilling and the acoustic characteristics associated with the rock samples. Also or alternatively, the mean frequency and the mean amplitude can be examined together and/or with the normalized deviation of frequency or apparent power, or a combination thereof. The operation of comparing can beneficially be performed substantially continuously during drill bit steering in order to provide enhanced steering ability.

According to an embodiment of the petrophysical properties analyzing program employing a bit-specific evaluation methodology, the operation of deriving petrophysical properties from the raw acoustic sensor data can include deriving a bit-specific petrophysical properties evaluation algorithm. The derivation of the algorithm can include collecting petrophysical properties data describing one or more petrophysical properties of rock for a plurality of formation samples and correspondent acoustic data for a preselected type of drill bit, processing the collected acoustic data to produce filtered FFT data, and determining one or more relationships between features of the filtered FFT data and correspondent one or more petrophysical properties of rock describing petrophysical properties of the plurality of formation samples. This can be accomplished, for example, by utilizing mathematical modeling techniques such as, multiple regression analysis, such as artificial neural network modeling, etc. The derivation of the algorithm can also include coding the determined relationships into computer program code defining the petrophysical properties evaluation algorithm. The operations can correspondingly include employing the derived petrophysical properties evaluation algorithm to predict one or more petrophysical properties of the rock undergoing drilling real-time responsive to filtered data associated with raw acoustic sensor data produced in response to the drilling.

According to an embodiment of the petrophysical properties analyzing program employing a bit-independent evaluation methodology, the petrophysical properties evaluation algorithm derivation can also or alternatively include collecting petrophysical properties data describing one or more petrophysical properties of rock for a plurality of formation samples and correspondent acoustic data for a plurality of different types of drill bits, processing the collected acoustic data to produce filtered FFT data, determining bit-type independent features of the filtered FFT data, and determining one or more relationships between the bit-type independent features of the filtered FFT data and correspondent one or more petrophysical properties of the rock to provide a bit-independent evaluation methodology. The algorithm derivation can also include coding the determined relationships into computer program code defining a bit-independent petrophysical properties evaluation algorithm. The operations can correspondingly include employing the derived petrophysical properties evaluation algorithm to predict one or more petrophysical properties of the rock undergoing drilling real-time responsive to filtered data associated with raw acoustic sensor data produced in response to the drilling, as described, for example, with respect to the prior described bit-specific evaluation methodology.

Various embodiments of the present invention advantageously supply a new approach for a much better drilling steering. Various embodiments of the present invention provide apparatus and methods that supply detailed information about the rock that is currently in contact with the drilling bit, which can be used in real-time steering the drilling bit. That is, various embodiments of the present invention advantageously provide an employable methodology of retrieving a sufficient level of information so that the driller always knows the rock he is drilling, so that the drilling bit can be steered to follow the desire path more accurately than conventionally achievable. In comparison with conventional drilling steering tools, the real-time data provided by various embodiments of the present invention advantageously allow the driller to drill smoother lateral or horizontal wells with better contact with the production zone, to detect formation boundaries in real-time, and to detect the fractured zones in real-time, and to perform further analysis on raw sensor data, if necessary.

## BRIEF DESCRIPTION OF THE DRAWINGS

So that the manner in which the features and advantages of the invention, as well as others which will become apparent, may be understood in more detail, a more particular description of the invention briefly summarized above may be had by reference to the embodiments thereof which are illustrated in the appended drawings, which form a part of this specification. It is to be noted, however, that the drawings illustrate only various embodiments of the invention and are therefore not to be considered limiting of the invention's scope as it may include other effective embodiments as well.

FIGS. 1A-1B is a partial perspective view and partial schematic diagram of a general architecture of an apparatus for identifying rock properties in real-time during drilling according to an embodiment of the present invention;

FIG. 2 is a schematic diagram showing a data processing procedure performed by a computer program according to an embodiment of the present invention;

FIG. 3 is a schematic diagram illustrating major components of a data preprocess module according to an embodiment of the present invention;

FIGS. 4A-4B are graphs illustrating examples of a frequency distribution of two types of carbonate according to an embodiment of the present invention;

FIG. 5 is a graph illustrating a three dimensional depiction of the frequency distribution in correlation with various lithography types according to an embodiment of the present invention;

FIG. 6 is a graph illustrating a comparison of mean frequency and normalized deviation of frequency correlated with a plurality of lithology types according to an embodiment of the present invention;

FIG. 7 is a schematic flow diagram illustrating steps for forming a petrophysical properties evaluation algorithm for a particular type of drill bit according to an embodiment of the present invention; and

FIG. 8 is a schematic flow diagram illustrating steps for forming a drill bit independent petrophysical properties evaluation algorithm according to an embodiment of the present invention.

## DETAILED DESCRIPTION

The present invention will now be described more fully hereinafter with reference to the accompanying drawings, which illustrate embodiments of the invention. This invention may, however, be embodied in many different forms and should not be construed as limited to the illustrated embodiments set forth herein. Rather, these embodiments are provided so that this disclosure will be thorough and complete, and will fully convey the scope of the invention to those skilled in the art. Like numbers refer to like elements throughout. Prime notation, if used, indicates similar elements in alternative embodiments.

When drilling into different lithologies or the same lithology with different properties (e.g., porosity, water saturation, permeability, etc.) the generated acoustic sounds emanating from the drill bit when drilling into rock, are distinctly different The sounds, termed as drilling acoustic signals hereafter, transmit upward along the drill string. According to various embodiments of the present invention, a sensor subassembly containing acoustic sensors is positioned above the drill bit and connected to the above drill string. The drilling acoustic signals transmit from the drill bit to the sensor subassembly and are picked up by the acoustic sensors. The drilling acoustic signals received by the sensors are transmitted (generally after amplification) to surface by a borehole transmitting system which can include various components such as, for example, a downhole data interface, a broadband conductor, a surface data interface, etc. On the surface, the received acoustic signals are transformed by a data processing module into the frequency domain using, for example, a Fast Fourier Transformation (FFT) to generate FFT data (primarily the frequency and amplitude data). Some acoustic characteristics are derived directly from the FFT data. The frequency distribution and acoustic characteristics, for example, can be used immediately in some applications, such as lithology type identification and formation boundary determination. The FFT data can be further analyzed using a calibrated mathematical model, for the lithology type and petrophysical properties, which have wider applications than the direct results (frequency distribution and acoustic characteristics).

Where conventional measurement-while-drilling tools are typically located 30 to 50 feet behind the drill bit, beneficially, a major advantage of approaches employed by various embodiments of the present invention is that such approaches can derive information about lithologies from a position located at the cutting surface of the drill bit to provide such information to the operator steering the drill bit, in real time. This advantage makes aspects of various embodiments of the present invention ideal in the application of horizontal and lateral well drill steering, locating the relative position for setting the casing shoe, detecting fractured zones, and interpreting rock lithologies and petrophysical properties in real time.

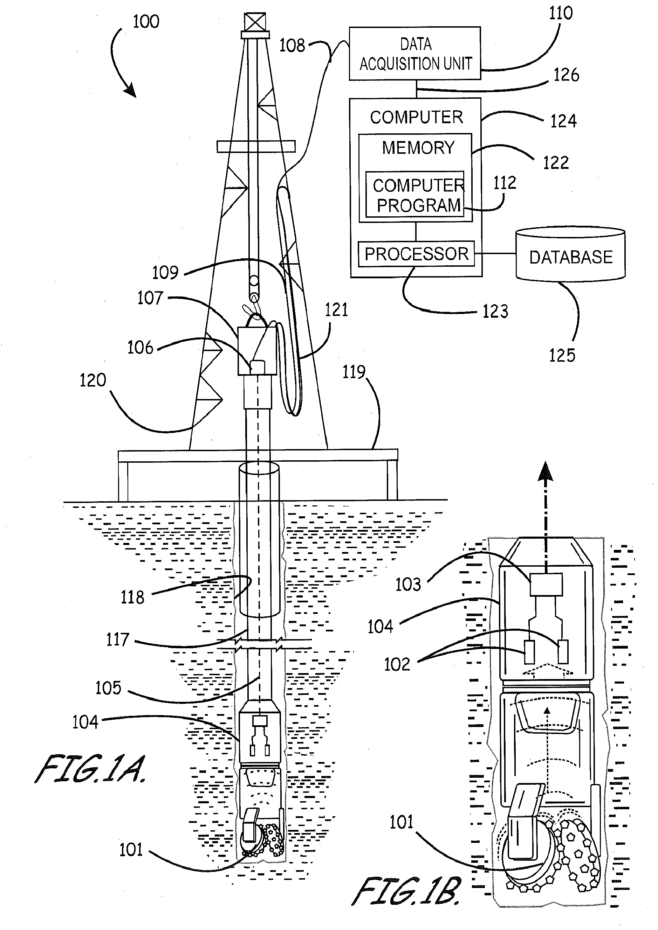

FIGS. 1A-1B schematically show the setup of an exemplary apparatus for identifying rock properties in real-time during drilling 100. Acoustic sensors 102 are connected to a downhole data "transmitting" interface 103. According to the exemplary configuration, both are contained in a sensor subassembly 104, which is positioned above a drill bit 101 and connected to a drill string 117. In operation, the drilling acoustic signals are generated when the drill bit 101 bites rocks at the bottom of a borehole 118 during the drilling process.

Different acoustic sensors 102 may be used, e.g. accelerometer, measurement microphone, contact microphone, and hydrophone. According to the exemplary configuration, at least one, but more typically each acoustic sensor 102 either has a built-in amplifier or is connected directly to an amplifier (not shown). The drilling acoustic signals picked up by the acoustic sensors 102 are amplified first by the amplifier before transmitted to the downhole data interface 103.

From the downhole data interface 103, acoustic signals are transmitted to a surface data "transmitting" interface 106 through a borehole broadband data transmitting system 105. Currently, one commercially available broadband data transmitting system, NOV™ IntelliServ®, can transmit data at the rate of 1000,000 bit/s. A study indicated that with two acoustic sensors 102 at normal working sampling rate of 5 seconds per sample, the required data transmitting rate was about 41,000 bits/s. Therefore, the NOV™ IntelliServ® borehole broadband data transmitting system is an example of a broadband communication media capable of transmitting acoustic signals data for at least four acoustic sensors 102 to surface directly from a downhole data interface 103.

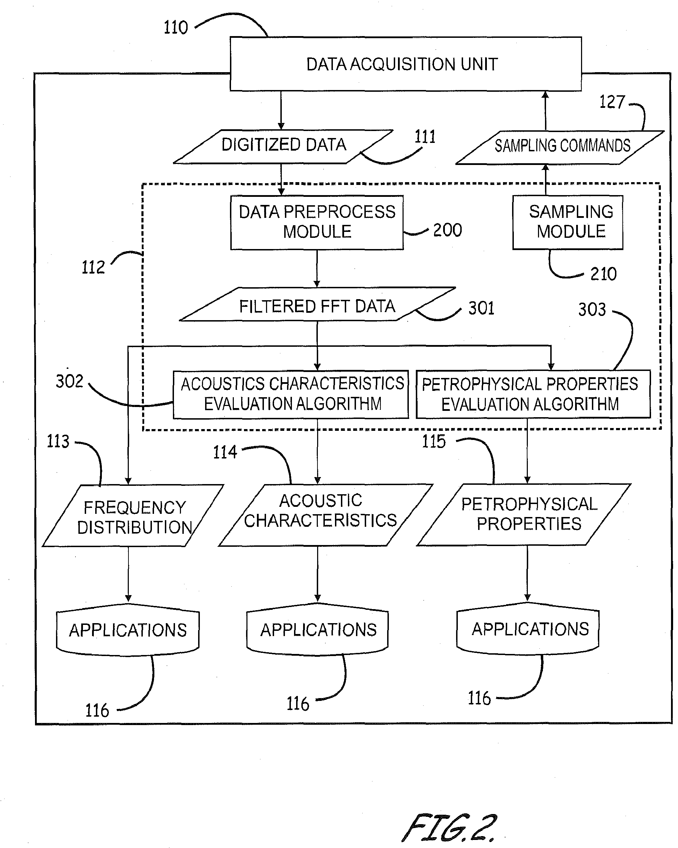

According to the exemplary configuration, the surface data interface 106 is located at the stationary part of the top drive 107. From the surface data interface 106, the acoustic signals are further transmitted to a data acquisition unit 110 through an electronic cable 108, which is protected inside a service loop 109. The data acquisition unit 110 is connected to a computer 124 through an electronic cable 126. The data acquisition unit 110 samples the acoustic signal in analog format and then converts the analog acoustic signals into digit data in FIG. 2.

Referring to FIGS. 1 and 2, the digitized data 111 is read by a computer program 112 (e.g., a petrophysical properties analyzing program), installed in memory 122 accessible to processor 123 of computer 124. The computer program 112 analyzes the digitized data 111 to derive a frequency distribution 113, acoustic characteristics 114, and petrophysical properties 115 of the rock undergoing drilling. The respective results, e.g., frequency distribution 113, acoustic characteristics 114, and petrophysical properties 115, can be used in various applications 116 to include lithology identification, drill bit steering, formation boundary identification, among others. Such data along with rock sample data, rock modeling data, etc. can be stored in database 125 stored in either internal memory 122 or an external memory accessible to processor 123.

Note, the computer 124 can be in the form of a personal computer or in the form of a server or server farm serving multiple user interfaces or other configurations known to those skilled in the art. Note, the computer program 112 can be in the form of microcode, programs, routines, and symbolic languages that provide a specific set or sets of ordered operations that control the functioning of the hardware and direct its operation, as known and understood by those skilled in the art. Note also, the computer program 112, according to an embodiment of the present invention, need not reside in its entirety in volatile memory, but can be selectively loaded, as necessary, according to various methodologies as known and understood by those skilled in the art. Still further, at least portions of the computer program 112 can be stored in memory of the sensor subassembly 104 when so configured.

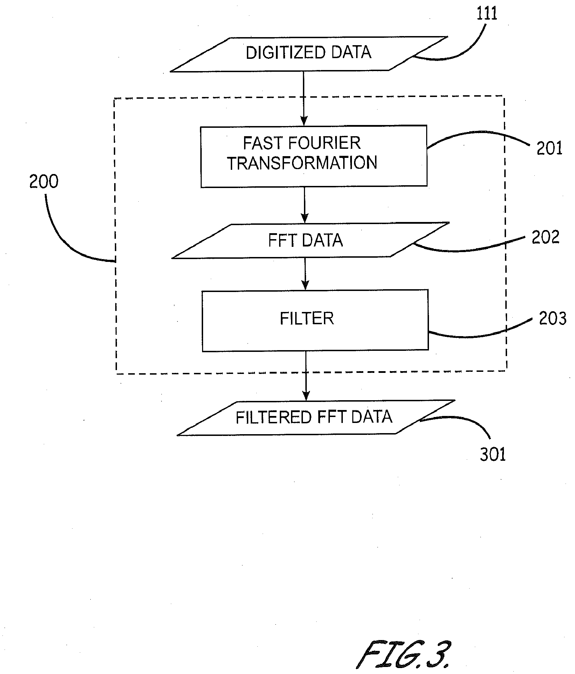

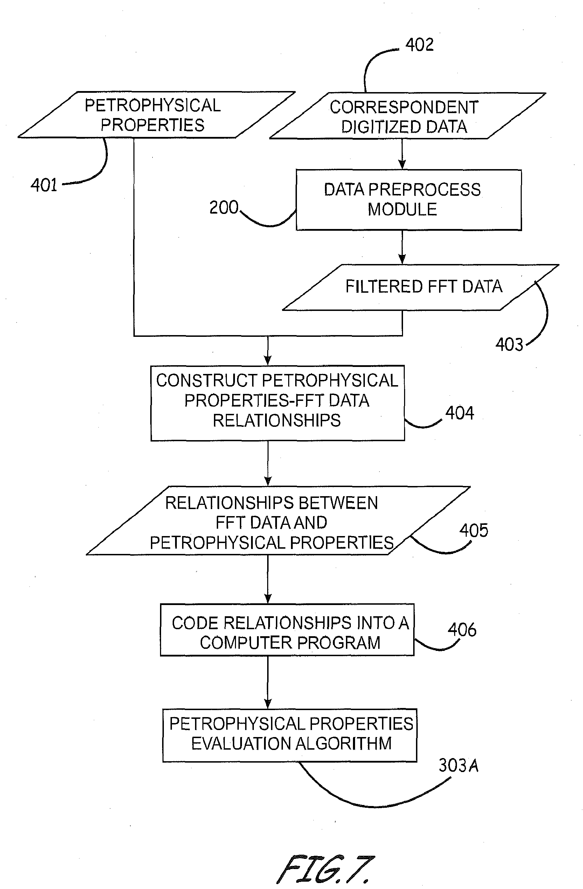

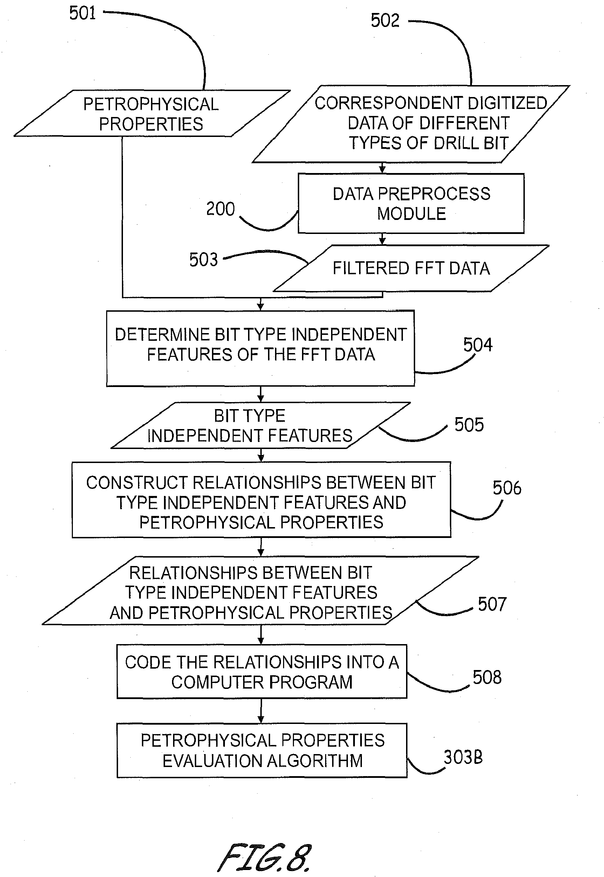

Referring to FIG. 3, according to the exemplary configuration, the digitized data 111 needs to be preprocessed before any use. According to the exemplary configuration, this is accomplished by a subroutine program referred to as data preprocess module 200. As illustrated in the figure, the digitized data is transformed into Fast Fourier Transform (FFT) data 202 by a FFT 201. The FFT data 202 is then filtered by a filter 203 to remove some low/high frequency and/or low amplitude data points, generated from other sources, i.e. not from the bit cutting into the rocks. The filtered FFT data 301 is then used in the various part of data process. Note. the filtered FFT data 301 is relabeled as 403 in FIG. 7. and 503 in FIG. 8. Note also, the digitized data 111 is relabeled as 402 in FIG. 7, and 502 in FIG. 8.

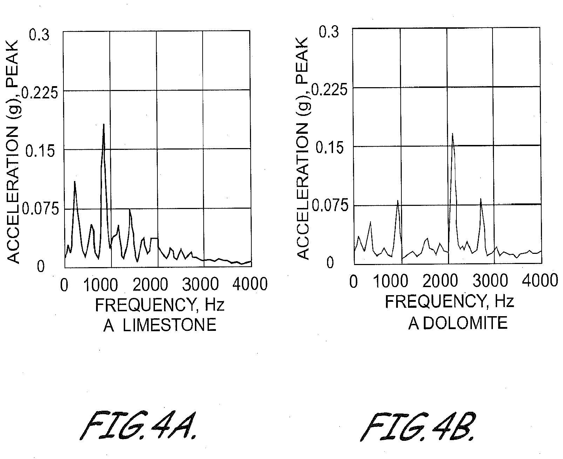

Major components and functions of the computer program 112 according to an exemplary configuration are detailed in FIG. 2. According to the exemplary configuration, there are four modules (components) in the computer program 112: a data preprocess module 200, a data sampling module 210, an acoustic characteristics evaluation algorithm 302, and a petrophysical properties evaluation algorithm 303. The sampling module 210 sends sampling commands 127, such as sampling rate, to the data acquisition unit 110 for data sampling control. The main part of the filtered FFT data 301 is a frequency distribution 113, which is the frequency and amplitude information of a sampled acoustic signal. Two examples of such signal are shown in FIGS. 4A and 4B. FIG. 4A illustrates the frequency distribution for a limestone and FIG. 4B illustrates the frequency distribution for limestone dolomite. A review of the frequency distribution of the two different types of carbonates illustrates how the frequency distribution can be used directly to distinguish lithologies.

According to the exemplary configuration, the frequency distribution 113 can be used directly in some applications, such as lithology type identification, formation boundaries determination, etc., represented by example at 116. The frequency distribution 113 can be plotted into time-frequency spectrum which can be used directly in some applications, such as lithology type identification, formation boundaries determination, etc., represented by example at 116.

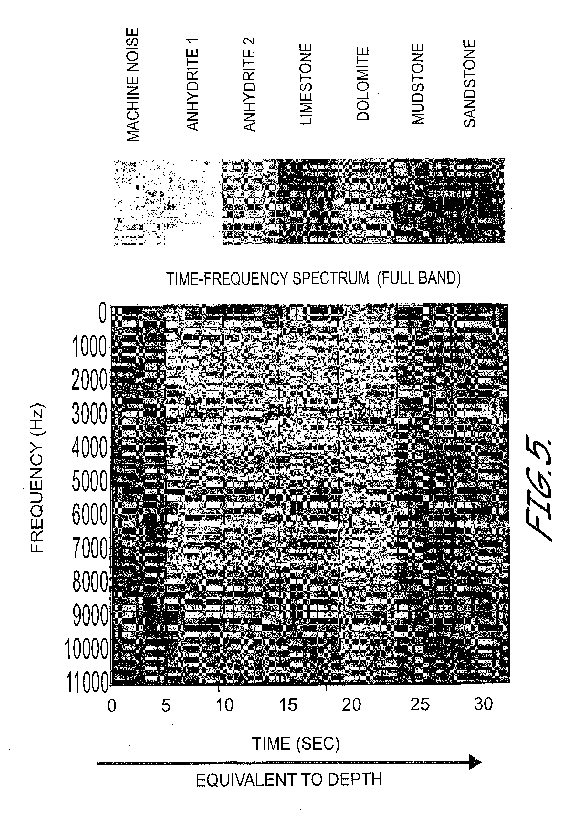

An example of such signal displaying diagram is shown in FIG. 5, which illustrates results of a laboratory experiment showing different lithologies have different frequency spectrums and lithology boundaries can be determined using the diagram. In FIG. 5, the color represents amplitude, with color normally displayed as red being highest (the intermixed color mostly concentrated just below the 4000 Hz range in this example) and the color normally displayed as blue being the lowest (the more washed out color in this example).

According to the exemplary configuration, an acoustic characteristics evaluation algorithm 302 evaluates the filtered FFT data 301 for select acoustic characteristics, such as, for example, mean frequency, normalized deviation of frequency, mean amplitude, normalized deviation of amplitude, and apparent power. These acoustic characteristics for an acoustic signal sample are defined as follows:

$$\mu_f = \frac{\sum_{i=1}^{n} A_i \cdot f_i}{\sum_{i=1}^{n} A_i} \tag{1}$$

$$\sigma_{f\_N} = \frac{1}{\mu_f} \sqrt{\sum_{i=1}^{n} \frac{A_i}{\sum_{i=1}^{n} A_i} \left(f_i - \mu_f\right)^2} \tag{2}$$

$$\mu_A = \frac{1}{n} \sum_{i=1}^{n} A_i \tag{3}$$

$$\sigma_{A\_N} = \frac{1}{\mu_A} \sqrt{\frac{1}{n} \sum_{i=1}^{n} (A_i - \mu_A)^2} \tag{4}$$

$$P_a = \sum_{i=1}^{n} A_i^2 f_i^2 \tag{5}$$

wherein:

$\mu_f$-mean frequency, Hz,

$\sigma_{f\_N}$-normalized deviation of frequency, Hz,

$\mu_A$-mean amplitude, the unit depending on the type of acoustic sensor used in the measurement,

$\sigma_{A\_N}$-normalized deviation of amplitude, the unit depending on the type of acoustic sensor used in the measurement,

$P_a$-apparent power, the unit depending on the type of acoustic sensor used in the measurement, $f_i$-- frequency of the $i^{th}$ point of the acoustic signal sample, Hz,

$A_i$-amplitude of the $i^{th}$ point of the acoustic signal sample, the unit depending on the type of acoustic sensor used in the measurement, and

n--number of data points of the acoustic signal sample.

The mean frequency and the normalized deviation of frequency characterize the frequency distribution, while the mean amplitude and the normalized deviation of amplitude characterize the loudness level of the drilling sound. Apparent power represents the power of the acoustic signals. In the evaluation, these characteristics can be calculated within the whole range or a partial range of the frequency of the acoustic samples. The range is selected to achieve the maximum difference of these characteristics among different lithologies.

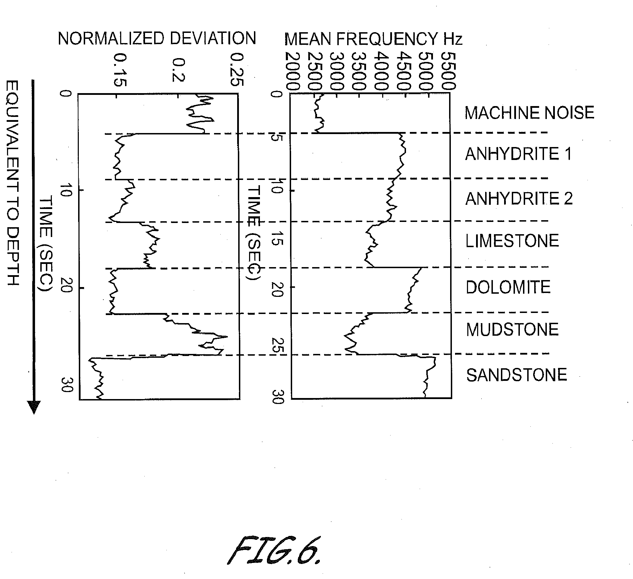

The derived acoustic characteristics 114 can be used directly for certain applications, such as lithology type identification, formation boundary determination represented by example at 116'. FIG. 6 illustrates results of a laboratory experiment showing that the mean frequency and normalized deviation of frequency correlated well with different lithology types.

According to an exemplary embodiment of the present invention, the mean frequency, the normalized deviation of frequency, the mean amplitude, the normalized deviation of amplitude, and/or the apparent power of the rock undergoing drilling can be compared with a corresponding mean frequency, normalized deviation of frequency, mean amplitude, normalized deviation of amplitude and/or apparent power of a plurality of rock samples having different known lithologies, to thereby determine an amount of correlation of the acoustic characteristics associated with the rock undergoing drilling and the acoustic characteristics associated with the rock samples. Responsively, the lithology type of the rock undergoing drilling can be determined.

FIGS. 7 and 8 illustrate examples of the construction of two types of petrophysical properties evaluation algorithms 303: one designed for a particular type of drill bit shown at 303A and the other designed to be drill bit type independent shown at 303B. Unlike the FFT 201 and the acoustic characteristics evaluation algorithm 302, which are based on known mathematical equations, the petrophysical properties evaluation algorithm 303 is based on mathematical models, which are to be built utilizing acoustic data and petrophysical properties according to an exemplary configuration.

FIG. 7 illustrates the procedure for constructing a "Petrophysical Properties Evaluation Algorithm" for a particular type of drill bit. According to the exemplary configuration, datasets of petrophysical properties 401 and correspondent digitized acoustic data 402 for a particular drill bit are collected. The digitized acoustic data 402 is preprocessed by the data preprocess module 200 (referred to in FIG. 2) to produce the filtered FFT data 403. The relationships 405 between filtered FFT data 403 and petrophysical properties 401 are constructed (step 404) using suitable mathematical modeling techniques, such as, multiple regression analysis, artificial neural networks modeling. Once relationships 405 between the filtered FFT data 403 and petrophysical properties 401 are constructed, the relationships are coded (step 406) to produce a computer program, module, subroutine, object, or other type of instructions to define the "petrophysical properties evaluation algorithm" 303A. The algorithm 303A is then available to be used in the computer program 112 to predict the petrophysical properties from drilling acoustic signals for the particular drill bit type.

FIG. 8 illustrates the procedure for constructing a drill bit type independent "Petrophysical Properties Evaluation Algorithm" 303B. The datasets of petrophysical properties 501 and the correspondent acoustic data 502 measured from different types of drill bit are collected. The acoustic data 502 is preprocessed by the data preprocess module 200 (e.g., the module referred to FIGS. 2 and 3) to produce the filtered FFT data 503. Bit type independent features 505 of the filtered FFT data 503 are then determined by comparing the filtered FFT data of different types of drill bit and the correspondent petrophysical properties 501 (step 504). Features which have weakest correlation with the drill bit types and strong correlation with the petrophysical properties are the bit-type independent ones. The relationships 507 between the petrophysical properties 501 and the bit type independent features 505 are constructed (step 506) using suitable mathematical modeling techniques, such as, for example, multiple regression analysis, artificial neural networks modeling, among others. The constructed relationships 507 are then coded (step 508) into a computer program, module, subroutine, object, or other type of instructions to define the "petrophysical properties evaluation algorithm" 303B. The algorithm 303B is then available to be used in the computer program 112 to predict the petrophysical properties from drilling acoustic signals.

Application of the results from the processed acoustic signal.

One direct result is the frequency distribution 113 (FIG. 2), which may be used directly in lithology type identification, formation boundary determination. FIGS. 4A and 4B, for example, show the frequency distribution of two different types of carbonates. The figures illustrate that the frequency distribution can be used in the lithology type identification from matching a detective frequency distribution with a frequency distribution of a rock of known lithography type.

FIG. 6 demonstrates the feasibility of using acoustic characteristics 114 (FIG. 2) to derive lithology information. In FIG. 6, mean frequency and normalized deviation were calculated from FFT data of the drilling sounds of a sample corer drilling into cores of different lithologies. The figure demonstrates how the lithology types can be distinguished by the combination of the two characteristics: mean frequency and the normalized deviation of frequency. If mean amplitude and the normalized deviation of the amplitude are also used, an even better result may be achieved. The figure also inherently demonstrates that formation boundaries can be determined from acoustic characteristics. FIGS. 7 and 8 demonstrate the feasibility of building a petrophysical properties evaluation algorithm 303 (FIG. 2) which can be used to evaluate processed forms of the sound generated by operationally engaging the drilling bit with the rock being drilled.

Various embodiments of the present invention provide several advantages. For example, various embodiments of the present invention beneficially provide a means to identify lithology type and physical properties, truly in real-time. This advantage makes various embodiments of the present invention ideal in the applications of (1) horizontal and lateral well drill steering and (2) locating the relative position for setting the casing shoe at a much higher precision. Various embodiments can also be used to (3) detect fractured zones; and (4) interpret rock lithologies and petrophysical properties. Various embodiments of the present invention beneficially supply more information for evaluating petrophysical properties of the rocks, such as porosity, strength, and presence of hydrocarbons, through the utilization of data obtained through the analysis of acoustic signals to evaluate these petrophysical properties. Such data can beneficially be beyond that which can be conventionally supplied.

In the drawings and specification, there have been disclosed a typical preferred embodiment of the invention, and although specific terms are employed, the terms are used in a descriptive sense only and not for purposes of limitation. The invention has been described in considerable detail with specific reference to these illustrated embodiments.

## Claims

1.  A method of analyzing properties of rock in a formation in real-time during drilling, the method comprising the steps of:

    sending sampling commands to a surface data acquisition unit (110) in communication with a downhole data interface (103) through a surface data interface (106) and a communication medium (105) extending between the surface data interface (106) and the downhole data interface (103), the downhole data interface (103) operably coupled to a plurality of acoustic sensors (102) carried by a downhole sensor assembly (104), said plurality of acoustic sensors (102) generating raw acoustic sensor data representing an acoustic signal generated real-time as a result of rotational contact of a drill bit (101) with rock during drilling;
    the method being **characterized by** the steps of:

    receiving, by a surface computer (124), the raw acoustic sensor data in digitized form from the surface data acquisition unit (110);
    transforming the raw acoustic sensor data into the frequency domain;
    filtering the transformed data; and
    performing, by the computer (124), the following processing steps:

    deriving a plurality of acoustic characteristics (114) from the filtered data (301), the plurality of acoustic characteristics (114) including mean frequency and normalized deviation of frequency,
    comparing the mean frequency and the normalized deviation of frequency for the rock undergoing drilling with mean frequency and normalized deviation of frequency for a plurality of rock samples having different lithologies,
    identifying lithology type of the rock undergoing drilling responsive to the step of comparing, and
    deriving petrophysical properties (115) from the filtered data (301) utilizing a petrophysical properties evaluation algorithm (303) to predict one or more petrophysical properties (115) of rock undergoing drilling.

2.  A method as defined in claim 1, wherein the mean frequency and normalized deviation of frequency are examined together as part of the step of comparing to thereby determine an amount of correlation of the acoustic characteristics (114) associated with the rock undergoing drilling and the acoustic characteristics (114) associated with the rock samples.

3.  A method as defined in either of claims 1 or 2,
    wherein the step of comparing further includes employing mean amplitude, normalized deviation of amplitude, and apparent power as part of the comparison to further enhance accuracy of the lithology determination; and
    wherein the mean frequency and the mean amplitude are examined together to determine an amount of correlation of the acoustic characteristics (114) associated with the rock undergoing drilling and the acoustic characteristics (114) associated with the rock samples.

4.  A method as defined in any of claims 1-3, wherein the one or more petrophysical properties (115) comprise: lithology type, porosity, water saturation, and permeability of rock undergoing drilling.

5.  A method as defined in any of claims 1-4, wherein the one or more petrophysical properties (115) comprise: presence of hydrocarbons in rock undergoing drilling when existing and presence of fractures in the rock undergoing drilling when existing.

6. A method as defined in any of claims 1, 2, 4, 5,
   wherein the plurality of acoustic characteristics (114) further include mean amplitude, normalized deviation of amplitude, and apparent power;
   wherein the processing steps comprise deriving the plurality of acoustic characteristics (114) from the filtered data (301); and
   wherein the method further comprises the steps of:

   comparing the mean frequency, the normalized deviation of frequency, the mean amplitude, and the normalized deviation of amplitude, and the apparent power for the rock undergoing drilling with mean frequency, normalized deviation of frequency, mean amplitude, normalized deviation of amplitude, and apparent power for a plurality of rock samples having different known lithologies to thereby determine an amount of correlation of the acoustic characteristics (114) associated with the rock undergoing drilling and the acoustic characteristics (114) associated with the rock samples, and
   determining a location of a formation boundary encountered during drilling responsive to the step of comparing.

7. A method as defined in any of claims 1-6, wherein the petrophysical properties evaluation algorithm (303) is a bit-specific petrophysical properties evaluation algorithm (303), the method being further **characterized by** the steps of:

   collecting petrophysical properties (115) data describing one or more petrophysical properties (115) of rock contained in a data set and correspondent acoustic data for a preselected type of drill bit (101);
   processing the collected acoustic data to produce filtered FFT data (301);
   determining one or more relationships between features of the filtered FFT data (301) and correspondent one or more petrophysical properties (115) of rock for each type of drill bit (101); and
   coding the determined relationships into computer program code defining the petrophysical properties evaluation algorithm (303); and
   wherein the step of deriving the petrophysical properties (115) includes employing the petrophysical properties evaluation algorithm (303) to predict one or more petrophysical properties (115) of the rock undergoing drilling real-time responsive to filtered data (301) associated with raw acoustic sensor data produced in response to the drilling.

8. A method as defined in claim 7, wherein the collected petrophysical properties (115) data describes petrophysical properties (115) of a plurality of samples taken from the formation undergoing drilling operations.

9. A method as defined in any of claims 1-8, wherein the petrophysical properties evaluation algorithm (303) is a bit-independent petrophysical properties evaluation algorithm (303), the method being further **characterized by** the steps of:

   collecting petrophysical properties (115) data describing one or more petrophysical properties (115) of rock and correspondent acoustic data for a plurality of different types of drill bits (101);
   processing the collected acoustic data to produce filtered FFT data (301);
   determining bit-type independent features of the filtered FFT data (301);
   determining one or more relationships between the bit-type independent features of the filtered FFT data (301) and correspondent one or more petrophysical properties (115) of the rock; and
   coding the determined relationships into computer program code defining the petrophysical properties evaluation algorithm (303); and
   wherein the step of deriving the petrophysical properties (115) includes employing the petrophysical properties evaluation algorithm (303) to predict one or more petrophysical properties (115) of the rock undergoing drilling real-time responsive to filtered data (301) associated with raw acoustic sensor data produced in response to the drilling.

10. A method as defined in claim 9, wherein the collected petrophysical properties (115) data describes petrophysical properties (115) of a plurality of samples taken from the formation undergoing drilling operations.

**Patentansprüche**

1. Verfahren zur Analyse der Eigenschaften von Gestein in einer Formation in Echtzeit während des Bohrens, wobei das Verfahren die Schritte umfasst:

   Senden von Abtastungsbefehlen an eine Übertage-Datenerfassungseinheit (110) in Kommunikation mit einer Untertage-Datenschnittstelle (103) über eine Übertage-Datenschnittstelle (106) und ein Kommunikationsmedium (105), das sich zwischen der Übertage-Datenschnittstelle (106) und der Untertage-Datenschnittstelle (103) erstreckt, wobei die Untertage-Datenschnittstelle (103) betrieblich mit einer Vielzahl von akustischen Sensoren (102) gekoppelt ist, die durch eine Untertage-Sensoranordnung (104) erbracht wird, wobei die Vielzahl von akustischen Sensoren (102) Akustiksensor-Rohdaten erzeugt, die ein akustisches Signal darstellen, das infolge des Drehkontakts eines Bohrers (101) mit Gestein während des Bohrens in Echtzeit erzeugt wird;
   wobei das Verfahren durch die Schritte gekennzeichnet ist:

   Empfangen der digitalisierten Form der Akustiksensor-Rohdaten von der Übertage-Datenerfassungseinheit (110) durch einen Übertage-Computer (124);
   Transformieren der Akustiksensor-Rohdaten in den Frequenzbereich;
   Filtern der transformierten Daten; und
   Durchführen der folgenden Verarbeitungsschritte durch den Computer (124):

   Ableiten einer Vielzahl von akustischen Charakteristika (114) aus den gefilterten Daten (301), wobei die Vielzahl von akustischen Charakteristika (114) eine mittlere Frequenz und eine normierte Frequenzabweichung einschließt,
   Vergleichen der mittleren Frequenz und der normierten Frequenzabweichung für das Gestein, welches gebohrt wird, mit der mittleren Frequenz und der normierten Frequenzabweichung für eine Vielzahl von Gesteinsproben mit unterschiedlichen Lithologien,
   Identifizieren des lithologischen Typs des Gesteins, welches gebohrt wird, als Reaktion auf den Schritt des Vergleichens, und
   Ableiten petrophysikalischer Eigenschaften (115) aus den gefilterten Daten (301) unter Verwendung eines Bewertungsalgorithmus (303) für petrophysikalische Eigenschaften, um eine oder mehrere petrophysikalische Eigenschaften (115) des Gesteins, welches gebohrt wird, vorherzusagen.

2. Verfahren nach Anspruch 1, worin die mittlere Frequenz und die normierte Frequenzabweichung als Teil des Schritts des Vergleichens gemeinsam untersucht werden, um dadurch einen Betrag der Korrelation der dem Gestein, welches gebohrt wird, zugeordneten akustischen Charakteristika (114) und der den Gesteinsproben zugeordneten akustischen Charakteristika (114) zu bestimmen.

3. Verfahren gemäß der Definition in einem der Ansprüche 1 oder 2,
   worin der Schritt des Vergleichs ferner einschließt: Verwenden der mittleren Amplitude, der normierten Amplitudenabweichung und der Scheinleistung als Teil des Vergleichs, um die Genauigkeit der Lithologiebestimmung weiter zu erhöhen; und
   worin die mittlere Frequenz und die mittlere Amplitude zusammen untersucht werden, um einen Betrag der Korrelation der dem Gestein, welches gebohrt wird, zugeordneten akustischen Charakteristika (114) und der den Gesteinsproben zugeordneten akustischen Charakteristika (114) zu bestimmen.

4. Verfahren nach einem der Ansprüche 1 bis 3, worin die eine oder die mehreren petrophysikalischen Eigenschaften (115) umfassen: Lithologietyp, Porosität, Wassersättigung und Permeabilität von Gestein, welches gebohrt wird.

5. Verfahren nach einem der Ansprüche 1 bis 4, worin die eine oder die mehreren petrophysikalischen Eigenschaften (115) umfassen: Vorliegen von Kohlenwasserstoffen in Gestein, welches gebohrt wird, wenn vorhanden, und Vorliegen von Brüchen in dem Gestein, welches gebohrt wird, wenn vorhanden.

6. Verfahren nach einem der Ansprüche 1, 2, 4, 5,
   worin die Vielzahl von akustischen Charakteristika (114) ferner die mittlere Amplitude, die normierte Amplitudenabweichung und die Scheinleistung einschließen;
   worin die Verarbeitungsschritte umfassen: Ableiten der Vielzahl von akustischen Charakteristika (114) aus den gefilterten Daten (301); und
   worin das Verfahren ferner die Schritte umfasst:

Vergleichen der mittleren Frequenz, der normierten Frequenzabweichung, der mittleren Amplitude, der normierten Amplitudenabweichung und der Scheinleistung für das Gestein, welches gebohrt wird, mit mittlerer Frequenz, normierter Frequenzabweichung, mittlerer Amplitude, normierter Amplitudenabweichung und Scheinleistung für eine Vielzahl von Gesteinsproben mit unterschiedlichen bekannten Lithologien, um dadurch einen Betrag der Korrelation der dem Gestein, welches gebohrt wird, zugeordneten akustischen Charakteristika (114) und der den Gesteinsproben zugeordneten akustischen Charakteristika (114) zu bestimmen, und Bestimmen einer Position einer Formationsgrenze, auf die während des Bohrens gestoßen wird, als Reaktion auf den Schritt des Vergleichens.

**7.** Verfahren nach einem der Ansprüche 1 bis 6,
worin der Bewertungsalgorithmus (303) für petrophysikalische Eigenschaften ein bohrmeißelspezifischer Bewertungsalgorithmus (303) für petrophysikalische Eigenschaften ist, wobei das Verfahren ferner durch die Schritte gekennzeichnet ist:

Sammeln von Daten über petrophysikalische Eigenschaften (115), die eine oder mehrere petrophysikalische Eigenschaften (115) von in einem Datensatz enthaltenem Gestein beschreiben, und entsprechenden akustischen Daten für einen vorgewählten Bohrmeißeltyp (101);
Verarbeiten der gesammelten akustischen Daten, um gefilterte FFT-Daten (301) zu erzeugen;
Bestimmen einer oder mehrerer Beziehungen zwischen Merkmalen der gefilterten FFT-Daten (301) und einer oder mehreren entsprechenden petrophysikalischen Eigenschaften (115) von Gestein für jeden Bohrmeißeltyp (101); und
Codieren der bestimmten Beziehungen in Computerprogrammcode, der den Bewertungsalgorithmus (303) für petrophysikalische Eigenschaften definiert; und

worin der Schritt des Ableitens der petrophysikalischen Eigenschaften (115) einschließt: Anwenden des Bewertungsalgorithmus (303) für petrophysikalische Eigenschaften, um eine oder mehrere petrophysikalische Eigenschaften (115) des Gesteins, welches gebohrt wird, in Echtzeit vorherzusagen, und zwar als Reaktion auf gefilterte Daten (301), die Akustiksensor-Rohdaten zugeordnet sind, welche als Reaktion auf das Bohren erzeugt wurden.

**8.** Verfahren nach Anspruch 7, worin die gesammelten Daten über petrophysikalische Eigenschaften (115) petrophysikalische Eigenschaften (115) einer Vielzahl von Proben beschreiben, die aus der Formation entnommen wurden, die Bohrarbeiten durchläuft.

**9.** Verfahren nach einem der Ansprüche 1 bis 8,
worin der Bewertungsalgorithmus (303) für petrophysikalische Eigenschaften ein bohrmeißelunabhängiger Bewertungsalgorithmus (303) für petrophysikalische Eigenschaften ist, wobei das Verfahren ferner durch die Schritte gekennzeichnet ist:

Sammeln von Daten über petrophysikalische Eigenschaften (115), die eine oder mehrere petrophysikalische Eigenschaften (115) von Gestein beschreiben, und entsprechenden akustischen Daten für eine Vielzahl von unterschiedlichen Bohrmeißeltypen (101);
Verarbeiten der gesammelten akustischen Daten, um gefilterte FFT-Daten (301) zu erzeugen;
Bestimmen von bohrmeißelunabhängigen Merkmalen der gefilterten FFT-Daten (301);
Bestimmen einer oder mehrerer Beziehungen zwischen den bohrmeißelunabhängigen Merkmalen der gefilterten FFT-Daten (301) und einer oder mehreren entsprechenden petrophysikalischen Eigenschaften (115) des Gesteins; und
Codieren der bestimmten Beziehungen in Computerprogrammcode, der den Bewertungsalgorithmus (303) für petrophysikalische Eigenschaften definiert; und

worin der Schritt des Ableitens der petrophysikalischen Eigenschaften (115) einschließt: Anwenden des Bewertungsalgorithmus (303) für petrophysikalische Eigenschaften, um eine oder mehrere petrophysikalische Eigenschaften (115) des Gesteins, welches gebohrt wird, in Echtzeit vorherzusagen, und zwar als Reaktion auf gefilterte Daten (301), die Akustiksensor-Rohdaten zugeordnet sind, welche als Reaktion auf das Bohren erzeugt wurden.

**10.** Verfahren nach Anspruch 9, worin die gesammelten Daten über petrophysikalische Eigenschaften (115) petrophysikalische Eigenschaften (115) einer Vielzahl von Proben beschreiben, die aus der Formation entnommen wurden, die Bohrarbeiten durchläuft.

**Revendications**

1. Procédé d'analyse de propriétés d'une roche dans une formation en temps réel pendant un forage, le procédé comprenant les étapes constituées par :

l'envoi de commandes d'échantillonnage sur une unité d'acquisition de données en surface (110) qui est en communication avec une interface de données de fond de trou de forage (103) par l'intermédiaire d'une interface de données en surface (106) et d'un support de communication (105) qui s'étend entre l'interface de données en surface (106) et l'interface de données de fond de trou de forage (103), l'interface de données de fond de trou de forage (103) étant couplée de manière opérationnelle à une pluralité de capteurs acoustiques (102) qui sont supportés par un assemblage de capteurs de fond de trou de forage (104), les capteurs acoustiques de ladite pluralité de capteurs acoustiques (102) générant des données brutes de capteur acoustique qui représentent un signal acoustique qui est généré en temps réel en tant que résultat d'un contact rotationnel d'une mèche de forage formant trépan (101) avec la roche pendant le forage ; le procédé étant **caractérisé par** les étapes constituées par :

la réception, par un ordinateur en surface (124), des données brutes de capteur acoustique sous forme numérisée en provenance de l'unité d'acquisition de données en surface (110) ;
la transformation des données brutes de capteur acoustique dans le domaine des fréquences ;
le filtrage des données transformées ; et
la réalisation, par l'ordinateur (124), des étapes de traitement qui suivent :

la dérivation d'une pluralité de caractéristiques acoustiques (114) à partir des données filtrées (301), les caractéristiques acoustiques de la pluralité de caractéristiques acoustiques (114) incluant une fréquence moyenne et un écart de fréquence normalisé ;
la comparaison de la fréquence moyenne et de l'écart de fréquence normalisé pour la roche qui fait l'objet d'un forage avec une fréquence moyenne et un écart de fréquence normalisé pour une pluralité d'échantillons de roche qui présentent des lithologies différentes ;
l'identification d'un type de lithologie de la roche qui fait l'objet d'un forage en réponse à l'étape de comparaison ; et
la dérivation de propriétés pétrophysiques (115) à partir des données filtrées (301) en utilisant un algorithme d'évaluation de propriétés pétrophysiques (303) de manière à prédire une ou plusieurs propriété(s) pétrophysique(s) (115) de la roche qui fait l'objet d'un forage.

2. Procédé tel que défini selon la revendication 1, dans lequel la fréquence moyenne et l'écart de fréquence normalisé sont examinés ensemble en tant que partie de l'étape de comparaison de manière à ainsi déterminer une valeur de corrélation des caractéristiques acoustiques (114) qui sont associées à la roche qui fait l'objet d'un forage et des caractéristiques acoustiques (114) qui sont associées aux échantillons de roche.

3. Procédé tel que défini selon l'une des revendications 1 et 2, dans lequel :

l'étape de comparaison inclut en outre l'utilisation d'une amplitude moyenne, d'un écart d'amplitude normalisé et d'une puissance apparente en tant que partie de la comparaison de manière à améliorer davantage la précision de la détermination de la lithologie ; et
dans lequel la fréquence moyenne et l'amplitude moyenne sont examinées ensemble de manière à déterminer une valeur de corrélation des caractéristiques acoustiques (114) qui sont associées à la roche qui fait l'objet d'un forage et des caractéristiques acoustiques (114) qui sont associées aux échantillons de roche.

4. Procédé tel que défini selon l'une quelconque des revendications 1 à 3, dans lequel les une ou plusieurs propriétés pétrophysiques (115) comprennent : le type de lithologie, la porosité, la saturation en eau et la perméabilité de la roche qui fait l'objet d'un forage.

5. Procédé tel que défini selon l'une quelconque des revendications 1 à 4, dans lequel les une ou plusieurs propriétés pétrophysiques (115) comprennent : la présence d'hydrocarbures dans la roche qui fait l'objet d'un forage lorsqu'ils existent et la présence de fractures dans la roche qui fait l'objet d'un forage lorsqu'elles existent.

6. Procédé tel que défini selon l'une quelconque des revendications 1, 2, 4 et 5, dans lequel :

les caractéristiques acoustiques de la pluralité de caractéristiques acoustiques (114) incluent en outre une amplitude moyenne, un écart d'amplitude normalisé et une puissance apparente ;

dans lequel les étapes de traitement comprennent la dérivation de la pluralité de caractéristiques acoustiques (114) à partir des données filtrées (301) ; et

dans lequel le procédé comprend en outre les étapes constituées par :

la comparaison de la fréquence moyenne, de l'écart de fréquence normalisé, de l'amplitude moyenne, de l'écart d'amplitude normalisé et de la puissance apparente pour la roche qui fait l'objet d'un forage avec la fréquence moyenne, l'écart de fréquence normalisé, l'amplitude moyenne, l'écart d'amplitude normalisé et la puissance apparente pour une pluralité d'échantillons de roche qui présentent des lithologies connues différentes de manière à ainsi déterminer une valeur de corrélation des caractéristiques acoustiques (114) qui sont associées à la roche qui fait l'objet d'un forage et des caractéristiques acoustiques (114) qui sont associées aux échantillons de roche ; et

la détermination d'une localisation d'une frontière de formation qui est rencontrée pendant le forage en réponse à l'étape de comparaison.

7. Procédé tel que défini selon l'une quelconque des revendications 1 à 6, dans lequel l'algorithme d'évaluation de propriétés pétrophysiques (303) est un algorithme d'évaluation de propriétés pétrophysiques spécifique pour la mèche de forage formant trépan (303), le procédé étant en outre **caractérisé par** les étapes constituées par :

la collecte de données de propriétés pétrophysiques (115) qui décrivent une ou plusieurs propriété(s) pétrophysique(s) (115) d'une roche et qui sont contenues dans un jeu de données et de données acoustiques correspondantes pour un type présélectionné de mèche de forage formant trépan (101) ;

le traitement des données acoustiques collectées de manière à produire des données filtrées FFT (301) ;

la détermination d'une ou de plusieurs relation(s) entre des caractéristiques des données filtrées FFT (301) et une ou plusieurs propriété(s) pétrophysique(s) correspondante(s) (115) de la roche pour chaque type de mèche de forage formant trépan (101) ; et

le codage des relations déterminées selon un code de programme informatique qui définit l'algorithme d'évaluation de propriétés pétrophysiques (303) ; et

dans lequel l'étape de dérivation des propriétés pétrophysiques (115) inclut l'utilisation de l'algorithme d'évaluation de propriétés pétrophysiques (303) de manière à prédire une ou plusieurs propriété(s) pétrophysique(s) (115) de la roche qui fait l'objet d'un forage en temps réel en réponse à des données filtrées (301) qui sont associées à des données brutes de capteur acoustique qui sont produites en réponse au forage.

8. Procédé tel que défini selon la revendication 7, dans lequel les données de propriétés pétrophysiques collectées (115) décrivent des propriétés pétrophysiques (115) d'une pluralité d'échantillons qui sont extraits à partir de la formation qui fait l'objet d'opérations de forage.

9. Procédé tel que défini selon l'une quelconque des revendications 1 à 8, dans lequel l'algorithme d'évaluation de propriétés pétrophysiques (303) est un algorithme d'évaluation de propriétés pétrophysiques indépendant de la mèche de forage formant trépan (303), le procédé étant en outre **caractérisé par** les étapes constituées par :

la collecte de données de propriétés pétrophysiques (115) qui décrivent une ou plusieurs propriété(s) pétrophysique(s) (115) d'une roche et de données acoustiques correspondantes pour une pluralité de différents types de mèches de forage formant trépan (101) ;

le traitement des donnés acoustiques collectées de manière à produire des données filtrées FFT (301) ;

la détermination de caractéristiques indépendantes du type de la mèche de forage formant trépan des données filtrées FFT (301) ;

la détermination d'une ou de plusieurs relation(s) entre les caractéristiques indépendantes du type de la mèche de forage formant trépan des données filtrées FFT (301) et une ou plusieurs propriété(s) pétrophysique(s) correspondante(s) (115) de la roche ; et

le codage des relations déterminées selon un code de programme informatique qui définit l'algorithme d'évaluation de propriétés pétrophysiques (303) ; et

dans lequel l'étape de dérivation des propriétés pétrophysiques (115) inclut l'utilisation de l'algorithme d'évaluation de propriétés pétrophysiques (303) de manière à prédire une ou plusieurs propriété(s) pétrophysique(s) (115) de la roche qui fait l'objet d'un forage en temps réel en réponse à des données filtrées (301) qui sont associées à des données brutes de capteur acoustique qui sont produites en réponse au forage.

10. Procédé tel que défini selon la revendication 9, dans lequel les données de propriétés pétrophysiques collectées (115) décrivent des propriétés pétrophysiques (115) d'une pluralité d'échantillons qui sont extraits à partir de la formation qui fait l'objet d'opérations de forage.

FIG.1A.

FIG.1B.

FIG.2.

FIG.3.

FIG.4A.

A LIMESTONE

FIG.4B.

A DOLOMITE

TIME-FREQUENCY SPECTRUM (FULL BAND)

FIG.5.

EQUIVALENT TO DEPTH

FIG.6.

FIG.7.

501

502

PETROPHYSICAL
PROPERTIES

CORRESPONDENT DIGITIZED
DATA OF DIFFERENT
TYPES OF DRILL BIT

200

DATA PREPROCESS
MODULE

503

FILTERED FFT DATA

DETERMINE BIT TYPE INDEPENDENT
FEATURES OF THE FFT DATA

504

BIT TYPE
INDEPENDENT FEATURES

505

CONSTRUCT RELATIONSHIPS BETWEEN BIT
TYPE INDEPENDENT FEATURES AND
PETROPHYSICAL PROPERTIES

506

RELATIONSHIPS BETWEEN BIT
TYPE INDEPENDENT FEATURES
AND PETROPHYSICAL PROPERTIES

507

CODE THE RELATIONSHIPS INTO A
COMPUTER PROGRAM

508

PETROPHYSICAL PROPERTIES
EVALUATION ALGORITHM

303B

*FIG.8.*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2508404
- US 2006076161 A
- US 2006120217 A